# EUROPEAN PATENT APPLICATION

(11) **EP 2 509 143 A2**
(43) Date of publication of application: **10.10.2012**
(21) Application number: 10834806.1
(22) Date of filing: 06.12.2010
(51) Int. Cl.: H01M 4/583, H01M 4/505, H01M 4/525, H01M 10/0525

(54) **ANODE ACTIVE MATERIAL PRECURSOR AND ACTIVE MATERIAL FOR A RECHARGEABLE LITHIUM BATTERY COMPRISING HOLLOW NANOFIBROUS CARBON, AND A PRODUCTION METHOD THEREFOR**

(30) Priority: 04.12.2009 KR 20090119919
(71) Applicant: Route JJ Co., Ltd, Siheung-si, Gyeonggi-do 429-450 (KR)
(72) Inventor: HONG, Ji Jun, Seoul 135-240 (KR); BYUN, Ki Taek, Seoul 157-839 (KR)
(74) Representative: Jell, Friedrich
(86) International application number: PCT/KR2010/008674
(87) International publication number: WO 2011/068391

(57) **Abstract**

Provided are an anode active material precursor and an active material for a recgargeable lithium battery comprising hollow nanofibrous carbon, and a production method thereof. The anode active material precursor for a rechargeable lithium battery comprising hollow nanofibrous carbon according to one embodiment of the present invention is a composite anode active material precursor for a rechargeable lithium battery comprising: hollow nanofibrous carbon; and an anode active material precursor joined to the skeleton of the hollow nanofibrous carbon, wherein the anode active material precursor comprises a metal composite represented by the following Formula 1-1 or Formula 1-2: Ma(PO₄)_{b} · nH₂O (Formula 1-1) and M(OH)_{c} · nH₂O (Formula 1-2); and a composite anode material for a rechargeable lithium battery according to the present invention is made electrically conductive by including a carbon substance, and the outside or the inside of the hollow nanofibrous carbon as well is charged with an olivine type lithium phosphate anode material. Consequently, it is possible to dramatically improve electrical conductivity which has been a shortcoming of olivine type lithium phosphate of the prior art, and it is possible to ensure a high capacity density suitable for high-capacity batteries since the anode active material is charged on the inside of the hollow nanofibrous carbon as well without wasting any space.

## Description

### Technical Field

The present invention relates to a cathode active material precursor and a cathode active material for a rechargeable lithium battery comprising hollow nanofibrous carbon, and production method thereof, and more specifically, to a cathode active material precursor and a cathode active material for a rechargeable lithium battery comprising hollow nanofibrous carbon which can dramatically improve electric conductivity that is a shortcoming of the olivine-type lithium iron phosphate since cathode active material of an olivine-type lithium iron phosphate is charged outside or inside the hollow nanofibrous carbon and which can secure high energy density suitable for high-capacity batteries since the cathode active material is also charged inside the hollow nanofibrous carbon without wasting any space of the carbon, and production method thereof.

### Background Art

Demand for a rechargeable lithium battery as power supplies or power sources for electric vehicles, portable small electronic devices including cellular phones, portable PDAs (Personal Digital Assistances), notebook PCs (Personal Computers), MP3 players, and others has recently been rapidly increased. Accordingly, requirements in high capacity maintenance and lifecycle extension for a rechargeable lithium battery have also been increased.

Lithium cobalt oxide (LiCoO₂), lithium nickel oxide (LiNiO₂), and lithium metal composite oxide (LiNi₁₋ₓCoₓO₂ (0<x<1), Li(Ni-Co-Mn)O₂, Li(Ni-Co-Al)O₂ and others) are used as cathode active material for a rechargeable lithium battery. In addition, inexpensive and highly stable Spinel lithium manganese oxide (LiMn₂O₄), Olivine-type lithium iron phosphate (LiFePO₄), lithium manganese phosphate (LiMnPO₄), and lithium-iron composite phosphorous oxides (Liₓfe_{1-y}M_{y}PO₄) are also receiving attention, wherein M is one or more selected from the group consisting of Mn, Cr, Co, Cu, Ni, V, Mo, Ti, Zn, Al, Ga, Mg, B and Nb, 0.05 ≤ x ≤ 1.2, and 0 ≤ y ≤ 0.8.

However, although the cathode active material such as lithium cobalt oxide, lithium nickel oxide or lithium metal composite oxide is excellent in basic properties of batteries, the cathode active material is not sufficient in terms of thermal stability, overcharge safety and other properties. Therefore, the cathode active material has drawbacks that a safety device is additionally required to improve these properties, and the price of the active material itself is expensive. Furthermore, the lithium manganese oxide (LiMn₂O₄) has a fatal defect of bad lifecycle performance due to structural change called Jahn-Teller distortion caused by trivalent manganese cations. The lithium manganese oxide (LiMn₂O₄) does not sufficiently satisfy needs for high energy density due to low electric capacity. Accordingly, Olivine-type lithium iron phosphate and lithium manganese phosphate make it difficult to expect superior battery properties due to considerably low electric conductivity, and they do not sufficiently satisfy needs for high capacity either due to low operating potential.

Therefore, although various researches have been conducted to solve such problems, effective solutions have not been suggested yet until now.

For instance, International Patent Publication No. WO 2007/093856 regarding a preparation method of lithium manganese phosphate and Korean Patent Publication No. 2002-0027286 regarding a preparation method of an olivine-type lithium iron phosphate comprising iron alone or composite metal suggest a method of mixing carbons in order to improve load characteristics of an cathode support by improving electric conductivity of the cathode active material when using, as cathode active material, an olivine-type lithium iron phosphate comprising manganese, iron, or composite metal. However, the effect of improving electric conductivity of lithium iron phosphate through mixing of a carbon composition is not enough.

Korean Patent Publication No. 10-2009-0053192 discloses an olivine-type lithium iron phosphate comprising manganese or iron alone, or composite metal. Specifically, this patent document suggests a method of improving electric conductivity of the cathode active material by growing nanofibrous carbon (carbon nanotubes or carbon nanofibers) having an oxygen-comprising functional group bonded to the surface of a cathode active material or a cathode active material. However, in this case, a process of growing nanofibrous carbon on the surface of active material is additionally required to result in lower productivity, and the cathode active material makes it difficult to expect improvement of energy density for application to high-capacity batteries.

Therefore, it is required to develop a method of producing cathode active material at a higher productivity which has a suitable energy density for application to high-capacity batteries, is excellent in safety as well as stability, maintains superior characteristics of the batteries, and enables cycle lives of the batteries to be extended.

### Detailed Description of the Invention

### Technical Problem

Therefore, an object of the present invention is to provide a method of producing a cathode active material precursor for a rechargeable lithium battery having improved electric conductivity, energy density, stability and safety, and cycle life characteristics, and the cathode active material precursor for a rechargeable lithium battery produced by the same.

Another object of the present invention is to provide a method of producing a cathode active material for a rechargeable lithium battery having the above-mentioned properties, and the cathode active material for a rechargeable lithium battery produced by the same.

### Technical Solution

In order to solve the above problems, the present invention provides a composite cathode active material precursor for a rechargeable lithium battery comprising: hollow nanofibrous carbon; and a cathode active material precursor bonded to the skeleton of the hollow nanofibrous carbon, wherein the cathode active material precursor comprising a metal composite represented by the following formula 1-1 or formula 1-2.

Mₐ(PO₄)_{b} · nH₂O (Formula 1-1)

M(OH)_{c} · nH₂O (Formula 1-2)

Where M represents one or more metal elements selected from the group consisting of Mn, Cr, Fe, Co, Ni, Cu, V, Mo, Ti, Zn, Al, Ga, Mg, B and Nb, a represents a number of 1 to 3, b represents a number of 1 to 2, c represents a number of 2 to 6, and n represents a number of 0 to 10.

In one embodiment of the present invention, the cathode active material precursor is joined inside or outside the skeleton of the hollow nanofibrous carbon, and the hollow nanofibrous carbon is single-walled carbon nanotubes or multi-walled carbon nanotubes.

In one embodiment of the present invention, the hollow nanofibrous carbon has a diameter of 1 to 200 nm, and the metal composite is a crystal of which primary particles have an average particle diameter of 10 to 500 nm and of which secondary particles have an average particle diameter of 1 to 20 µm.

In one embodiment of the present invention, a composite cathode active material precursor comprising: hollow nanofibrous carbon; and a cathode active material bonded to the skeleton of the hollow nanofibrous carbon, wherein the cathode active material is represented by the following formula 2, and the cathode active material comprises a carbon substance.

Li_{d}MPO₄ (Formula 2)

Where M represents one or more metal elements selected from the group consisting of Mn, Cr, Fe, Co, Ni, Cu, V, Mo, Ti, Zn, Al, Ga, Mg, B and Nb, and d represents a number of 0.5 to 1.5.

In one embodiment of the present invention, the cathode active material is an olivine-type lithium iron phosphate surrounded by a carbon substance, and the hollow nanofibrous carbon is single-walled carbon nanotubes or multi-walled carbon nanotubes.

In one embodiment of the present invention, the hollow nanofibrous carbon has a diameter of 1 to 200 nm, and the carbon substance is one or more selected from the group consisting of sucrose, citric acid, starch, oligosaccharide, and pitch.

In order to solve the foregoing problems, the present invention provides a production method of a composite cathode active material precursor for a rechargeable lithium battery comprising the steps of: (a) uniformly dispersing hollow nanofibrous carbon into an aqueous solution of metal salt comprising metal M of a metal composite of the following Formula 1-1 or Formula 1-2 to prepare a dispersion; (b) continuously flowing the dispersion and spraying an aqueous phosphate solution into a flow of the dispersion to form a metal composite precipitate of the following Formula 1-1 or Formula 1-2 represented by the following Chemical Formula 1, and flowing a solution comprising the precipitate into a reactor; (c) stirring a reaction system in the reactor or vibrating ultrasonic waves in the reaction system using Sonochemistry, thereby allowing the metal composite to be precipitated inside and outside the skeleton of the hollow nanofibrous carbon to form a cathode active material precursor; and (d) separating the cathode active material precursor to recover, wash, and dry the cathode active material precursor.

[Chemical Formula 1]

Mₐ(PO₄)_{b} · nH₂O (Formula 1-1)

M(OH)_{c} · nH₂O (Formula 1-2)

Where M represents one or more metal elements selected from the group consisting of Mn, Cr, Fe, Co, Ni, Cu, V, Mo, Ti, Zn, Al, Ga, Mg, B and Nb, a represents a number of 1 to 3, b represents a number of 1 to 2, c represents a number of 2 to 6, and n represents a number of 0 to 10.

In one embodiment of the present invention, the ultrasonic vibration is conducted at the multibubble sonoluminescence (MBSL) condition.

In order to solve the above-mentioned and other problems, the present invention provides a production method of a composite cathode active material comprising the steps of: (e) titrating a lithium salt and an aqueous carbon substance solution into an aqueous dispersion of the cathode active material precursor produced by the above-mentioned method to stir and mix those raw materials; (f) drying the mixture; and (g) calcining the dried mixture in an inert gas atmosphere to obtain a composite cathode active material, wherein the composite cathode active material comprises hollow nanofibrous carbon, and a cathode active material bonded to the skeleton of the hollow nanofibrous carbon, and the cathode active material is represented by the following formula 2.

Li_{d}MPO₄ (Formula 2)

Where M represents one or more metal elements selected from the group consisting of Mn, Cr, Fe, Co, Ni, Cu, V, Mo, Ti, Zn, Al, Ga, Mg, B and Nb, and d represents a number of 0.5 to 1.5.

In one embodiment of the present invention, the cathode active material is an olivine-type lithium iron phosphate which comprises a carbon substance or which is surrounded by the carbon substance.

In order to solve another problems, the present invention provides a production method of a composite cathode active material further comprising the steps of: (e) milling a lithium salt and a cathode active material precursor produced by the above-mentioned method to mix those raw materials; and (f) calcining the mixture in an inert gas atmosphere to obtain a composite cathode active material, wherein the composite cathode active material comprises hollow nanofibrous carbon, and a cathode active material bonded to the skeleton of the hollow nanofibrous carbon, and the cathode active material is represented by the following Chemical Formula 2.

Li_{d}MPO₄ (Formula 2)

Where M represents one or more metal elements selected from the group consisting of Mn, Cr, Fe, Co, Ni, Cu, V, Mo, Ti, Zn, Al, Ga, Mg, B and Nb, and d represents a number of 0.5 to 1.5.

In one embodiment of the present, the hollow nanofibrous carbon in the dispersion of the step (a) has a content of 0.1 to 10 weight% based on the total weight of the dispersion, and the hollow nanofibrous carbon is dispersed using a ultrasonic dispersion method or a high-pressure dispersion method in the step of preparing the dispersion of the step (a).

Furthermore, the step (b) is conducted in a method of spraying the aqueous phosphate solution into the dispersion using a spray nozzle while flowing the dispersion continuously and slowly using a metering pump, and the step (c) includes precipitation reaction of the crystal which is performed in a temperature range of 5 to 70 °C under an inert gas atmosphere.

In one embodiment of the present invention, the calcinations is performed in a temperature range of 400 to 800 °C under an inert gas atmosphere.

### Effects of the Invention

A composite cathode active material for a rechargeable lithium battery according to the present invention includes a carbon substance or is surrounded by the carbon substance, has conductivity, and also includes an olivine-type lithium iron phosphate as a cathode active material filled outside or inside hollow nanofibrous carbon. Therefore, the composite cathode active material for a rechargeable lithium battery can substantially improve electric conductivity that is a drawback of conventional olivine-type lithium iron phosphate, and can secure high energy density suitable for high-capacity batteries since the cathode active material is also filled inside the hollow nanofibrous carbon without wasting any space of the hollow nanofibrous carbon. Furthermore, the rechargeable lithium battery produced using a composite cathode active material for a rechargeable lithium battery of the present invention can improve cycle life characteristics of the batteries and improve stability and safety while maintaining basic electrical properties of the batteries. Furthermore, a production method of a composite cathode active material for a rechargeable lithium battery of the present invention is capable of producing a composite cathode active material having the above-mentioned properties at superior reproducibility and productivity.

### Brief Description of the Drawings

Fig. 1 is a partial mimetic diagram of a composite cathode active material precursor for a rechargeable lithium battery according to an aspect of the present invention.

Fig. 2 is a mimetic diagram which mimetic diagrammatically illustrates the cross-section of a composite cathode active material for a rechargeable lithium battery according to an aspect of the present invention.

Fig. 3 is a flow chart for explaining up to the step of producing the composite cathode active material precursor in a production method of a composite cathode active material for a rechargeable lithium battery according to other aspect of the present invention.

Fig. 4 is a flow chart for explaining the step of producing the composite cathode active material through the wet mixing process using the composite cathode active material precursor in a production method of a composite cathode active material for a rechargeable lithium battery according to other aspect of the present invention.

Fig. 5 is a flow chart for explaining the step of producing the composite cathode active material through the dry mixing process using the composite cathode active material precursor in a production method of a composite cathode active material for a rechargeable lithium battery according to other aspect of the present invention.

Fig. 6 to Fig. 11 are images of particles of a composite cathode active material according to the present invention measured by FE-SEM (Field Emission-Scanning Electron Microscope).

Fig. 12 is a graph showing evaluation results of test examples of the present invention for battery evaluation.

### Best Mode for Carrying Out the Invention

Hereinafter, the foregoing composite cathode active material precursor, composite cathode active material, and a production method thereof of the present invention will be described in detail. However, the present invention may be embodied in many different forms and should not be construed as being limited to the embodiments set forth herein. Rather, these embodiments are provided such that this disclosure will be thorough and complete and will fully convey the scope of the present invention to those skilled in the art.

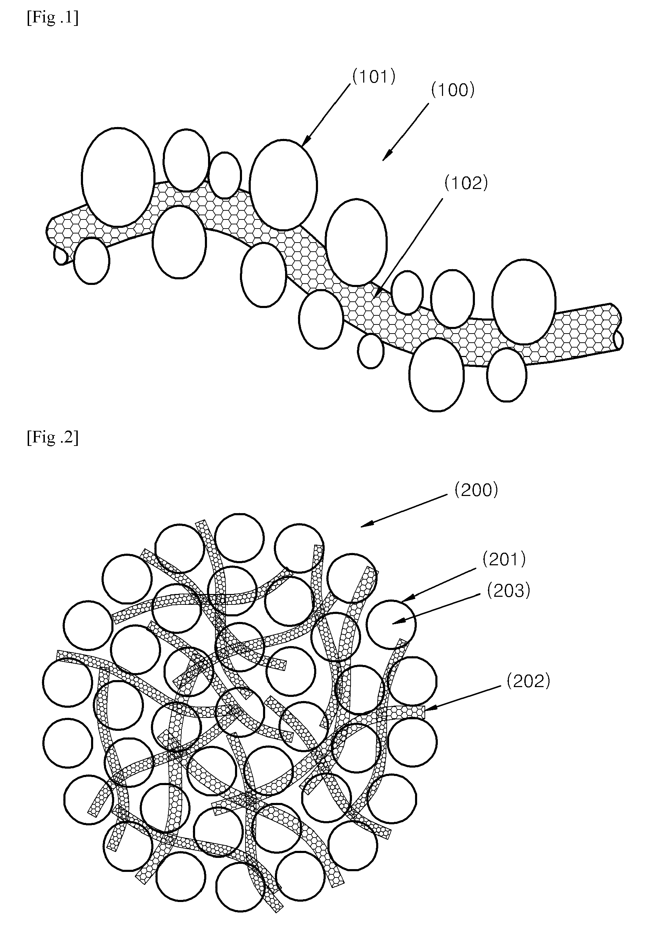

Fig. 1 illustrates mimetic diagrammatically the cross-section of a composite cathode active material precursor for a rechargeable lithium battery or a composite cathode active material for a rechargeable lithium battery according to an aspect of the present invention.

In case that Fig. 1 illustrates a composite cathode active material precursor 100 for a rechargeable lithium battery, the composite cathode active material precursor 100 comprises: hollow nanofibrous carbon 101; and a cathode active material precursor 102 located in a state that the cathode active material precursor is joined inside and outside the skeleton of the hollow nanofibrous carbon 101. In one embodiment of the present invention, the cathode active material is metal phosphate of the formula 1-1 of the following Chemical Formula 1, a metal phosphate composite or hydrates thereof as a metal composite, or is metal hydroxide of the formula 1-2 of the following Chemical Formula 1, a metal hydroxide composite or hydrates thereof as a metal composite.

[Chemical Formula 1]

Mₐ(PO₄)_{b} · nH₂O (Formula 1-1)

M(OH)_{c} · nH₂O (Formula 1-2)

Where M represents one or more metal elements selected from the group consisting of Mn, Cr, Fe, Co, Ni, Cu, V, Mo, Ti, Zn, Al, Ga, Mg, B and Nb, a represents a number of 1 to 3, b represents a number of 1 to 2, c represents a number of 2 to 6, and n represents a number of 0 to 10.

The hollow nanofibrous carbon 101 may be single-walled carbon nanotubes or multi-walled carbon nanotubes. The hollow nanofibrous carbon 101 has a diameter of 1 to 200 nm preferably, 1 to 100 nm more preferably, and 1 to 50 nm most preferably. Since the surface area of the olivine-type lithium iron phosphate is decreased if the hollow nanofibrous carbon has a diameter of exceeding 200 nm, effects of the olivine-type lithium iron phosphate are greatly lowered compared to when the same quantity of other compound as the olivine-type lithium iron phosphate is used. Accordingly, it is difficult to realize tap density or energy density suitable for application to high capacity a rechargeable lithium battery since secondary particles of the olivine-type lithium iron phosphate have an increased diameter. Primary particles of the metal phosphate, metal phosphate composite or hydrates thereof may have an average particle diameter of 10 to 500 nm, and secondary particles of the metal phosphate, metal phosphate composite or hydrates thereof may have an average particle diameter of 1 to 20 µm.

When Fig. 1 illustrates a composite cathode active material 100 for a rechargeable lithium battery, the composite cathode active material 100 comprises: hollow nanofibrous carbon 101; and a cathode active material 102 located inside and outside the skeleton of the hollow nanofibrous carbon 101. The cathode active material 102 is an olivine-type lithium iron phosphate represented by the following Chemical Formula 2.

[Chemical Formula 2] Li_{d}MPO₄

Where M represents one or more metal elements selected from the group consisting of Mn, Cr, Fe, Co, Ni, Cu, V, Mo, Ti, Zn, Al, Ga, Mg, B and Nb, and d represents a number of 0.5 to 1.5. The hollow nanofibrous carbon may be single-walled carbon nanotubes or multi-walled carbon nanotubes. The hollow nanofibrous carbon may have a diameter of 1 to 200 nm.

Fig. 2 is a mimetic diagram which mimetic diagrammatically illustrates the cross-section of a composite cathode active material for a rechargeable lithium battery according to an aspect of the present invention.

Referring to Fig. 2, a composite cathode active material 200 produced according to the present invention may comprise a carbon substance 201, or may include: a cathode active material and hollow nanofibrous carbon 202 which are surrounded by the carbon substance 201; and the cathode active material 203 located inside or outside the skeleton of the hollow nanofibrous carbon 202, wherein the cathode active material 203 is an olivine-type lithium iron phosphate represented by the following Chemical Formula 2.

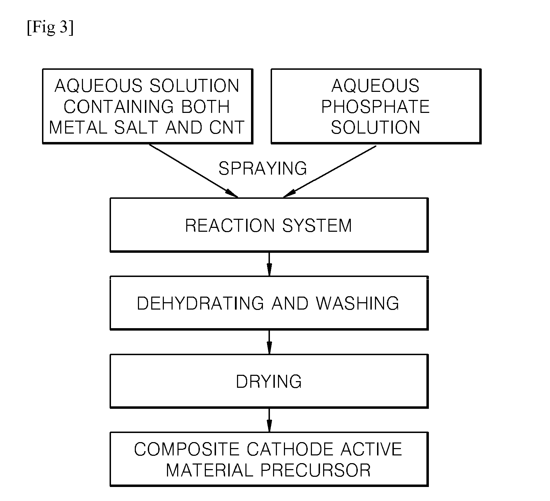

Fig. 3 is a flow chart for explaining up to the step of producing the composite cathode active material precursor in a production method of a composite cathode active material for a rechargeable lithium battery according to other aspect of the present invention.

First, hollow nanofibrous carbon is uniformly dispersed into an aqueous metal salt solution comprising metal M to prepare a dispersion, wherein M represents one or more metal elements selected from the group consisting of Mn, Cr, Fe, Co, Ni, Cu, V, Mo, Ti, Zn, Al, Ga, Mg, B and Nb. Applicable metal salt forms selected from the group consisting of acetate, nitrate, sulfate, carbonate, citrate, phthalate, perchlorate, acetylacetonate, acrylate, formate, oxalate, halide, oxyhalide, boride, sulfide, alkoxide, ammonium, acetylacetone, and combinations thereof are preferably used, and the metal salt forms are not particularly limited if they are industrially available. The hollow nanofibrous carbon has a content range of 0.1 to 10 weight% based on the total weight of the dispersion. The content of the hollow nanofibrous carbon may be preferably 0.1 to 5 weight%, more preferably 0.1 to 3 weight%. The hollow nanofibrous carbon may be dispersed using an ultrasonic dispersion method or a high-pressure dispersion method. Subsequently, precipitates of metal phosphate, composite metal phosphate or hydrates thereof represented by formula 1-1 of Chemical Formula 1 are formed, or precipitates of metal hydroxide, composite metal hydroxide or hydrates thereof represented by formula 1-2 of Chemical Formula 1 are formed by spraying an aqueous phosphate solution into a flow of the dispersion using, for example, a spray nozzle while continuously flowing the dispersion. Then, a solution comprising the precipitates is flown into a reactor.

[Chemical Formula 1] Mₐ(PO₄)_{b} · nH₂O (Formula 1-1)

M(OH)_{c} · nH₂O (Formula 1-2)

Where M represents one or more metal elements selected from the group consisting of Mn, Cr, Fe, Co, Ni, Cu, V, Mo, Ti, Zn, Al, Ga, Mg, B and Nb, a represents a number of 1 to 3, b represents a number of 1 to 2, c represents a number of 2 to 6, and n represents a number of 0 to 10.

Phosphate for preparing metal phosphate, composite metal phosphate or hydrates thereof represented by formula 1-1 of Chemical Formula 1 is added in an amount of 40 to 80% based on the total weight of metal salts in the dispersion. For instance, the phosphate is added in an amount according to the stoichiometric ratio. Examples of phosphate may include diammonium phosphate, sodium phosphate, monosodium phosphate, sodium pyrophosphate, sodium polyphosphate, calcium phosphate, and others. Although monosodium phosphate is more preferable from the viewpoint of the environmentally friendly process, industrially available phosphates are not particularly limited. Furthermore, a basic aqueous solution for preparing metal hydroxide, composite metal hydroxide or hydrates thereof represented by formula 1-2 of Chemical Formula 1 is added in an amount of 15 to 70% based on the total weight of metal salts in the dispersion. For instance, the basic aqueous solution is added in an amount according to the Stoichiometric ratio. Examples of hydroxide may include sodium hydroxide, ammonium hydroxide, potassium hydroxide, and others. Although sodium hydroxide is more preferable, industrially available hydroxides are not particularly limited.

An operation of continuously flowing the dispersion may be carried out using, for example, a metering pump, and an operation of spraying an aqueous phosphate solution or aqueous basic solution into a flow of the dispersion may be performed by a method of spraying the aqueous phosphate solution or aqueous basic solution into the dispersion using, for example, a spray nozzle.

Subsequently, a reaction system is sufficiently stirred to a low speed in the reactor or ultrasonic waves are vibrated in the reaction system using Sonochemistry so that crystals of the metal phosphate, composite metal phosphate or hydrates thereof, or metal hydroxide, composite metal hydroxide or hydrates thereof are precipitated inside as well as outside the skeleton of the hollow nanofibrous carbon and bonded to the skeleton of the carbon as referred to Fig. 1. It is preferable to maintain temperature, operation frequency, and operation intensity inside the reactor to ranges of 5 to 70 °C, 28 to 400 kHz, and 100 to 800 W respectively by using a circulation type constant temperature oven. Rather than using a method of generally vibrating ultrasonic waves using Sonochemistry, it is more preferable to perform precipitation of the crystals more promptly when multibubble sonoluminescence (MBSL) conditions are formed by constantly pressurizing pressure inside the reactor to a range of 1 to 5 atm at the state that the operation frequency, operation intensity and temperature inside the reactor are controlled or maintained to ranges of 20 to 300 kHz, 160 to 600 W, and 15 to 35 °C respectively. It is preferable to blow an inert gas selected from the group consisting of nitrogen gas, argon gas, and a combination thereof into the reactor. The size of particles of prepared metal phosphate, composite metal phosphate hydrate, metal hydroxide, or composite metal hydroxide can be decreased, and tap density of the particles can be further increased by injecting the nitrogen gas and/or argon gas into the reactor.

Therefore, a cathode active material precursor of a structure illustrated in Fig. 1 is formed. Consecutively, a composite cathode active material precursor for a rechargeable lithium battery according to one aspect of the present invention is obtained by conducting solid-liquid separation of the cathode active material precursor using an ordinary method, and recovering and washing the separated cathode active material precursor. The washing process is preferably performed by sufficiently washing the cathode active material precursor with water until the precipitated crystals of metal phosphate, composite metal phosphate hydrate, metal hydroxide, or composite metal hydroxide have a content of 1 weight% or less, preferably 0.8 weight% or less, and more preferably 0.5 weight% or less.

Primary particles of the obtained composite cathode active material precursor have an average particle diameter of 500 nm, preferably 200 nm, and more preferably 10 to 100 nm, and secondary particles of the composite cathode active material precursor have an average particle diameter of 1 to 20 microns, preferably 1 to 10 microns, and more preferably 1 to 5 microns in the state that crystals of metal phosphate or composite metal phosphate hydrate are commonly existed inside and outside hollow nanofibrous carbon. The particles are preferably formed in a spherical shape.

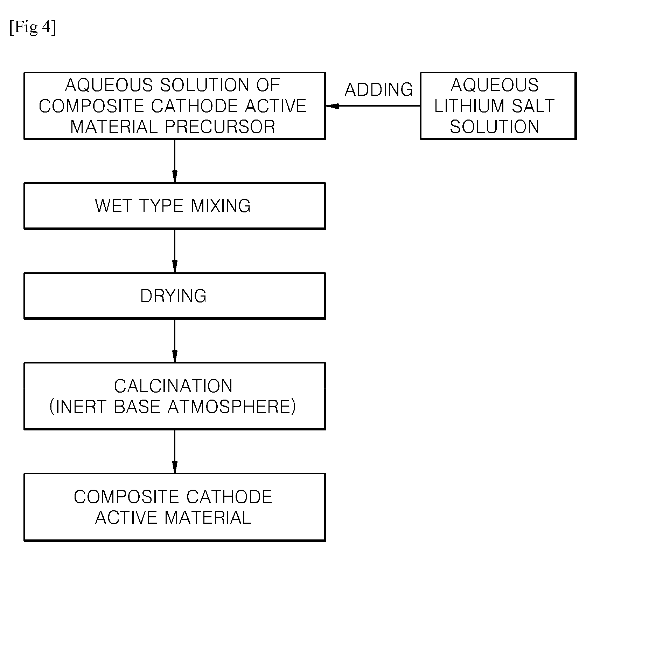

Fig. 4 is a flow chart for explaining the step of producing the composite cathode active material through the wet mixing process using the composite cathode active material precursor in a production method of a composite cathode active material for a rechargeable lithium battery according to other aspect of the present invention.

The aqueous lithium salt solution is mixed with the aqueous dispersion by stirring the aqueous lithium salt solution and the aqueous dispersion after titrating an aqueous lithium salt solution into an aqueous dispersion of a cathode active material precursor obtained by uniformly dispersing the composite cathode active material precursor obtained by the above-described method into water. Types of lithium salts suitable for preparing an olivine-type lithium iron phosphate of the Chemical Formula 2 using metal phosphate, composite metal phosphate or hydrates thereof represented by the Formula 1-1 of the Chemical Formula 1 may include acetate, nitrate, sulfate, carbonate, hydroxide, and phosphate such as lithium phosphate (Li₃PO₄), and the lithium salts are not particularly limited if they are industrially available. Furthermore, carbonaceous raw material is added in an aqueous dispersion of the cathode active material precursor to further increase electric conductivity of the composite cathode material.

It is more preferable to use lithium hydroxide as a lithium salt in the wet process, and to use lithium carbonate or lithium phosphate as the lithium salt in the dry process. Suitable types of lithium salts suitable for preparing an olivine-type lithium iron phosphate of the Chemical Formula 2 using metal hydroxide, composite metal hydroxide or hydrates thereof represented by the Formula 1-2 of the Chemical Formula 1 may include lithium dihydrogen phosphate (LiH₂PO₄) and lithium phosphate, and the lithium salts are not particularly limited if they are industrially available. Furthermore, carbonaceous raw materials are added in an aqueous dispersion of the cathode active material precursor to further increase electric conductivity of the composite cathode material. Suitable types of carbonaceous raw materials in the composite cathode active material may include sucrose, citric acid, oligosaccharide, starch and pitch, and the carbonaceous raw materials are not particularly limited if they are industrially available.

Consequently, a composite cathode active material according to one aspect of the present invention having a structure illustrated in Fig. 1 and Fig. 2 is obtained by drying the mixture and calcining the dried mixture in an inert gas atmosphere. Calcination is performed in a temperature range of 400 to 800 °C under an inert gas atmosphere. The obtained composite cathode active material 200 comprises a carbon substance 201, or includes: a cathode active material and hollow nanofibrous carbon 202 which are surrounded by the carbon substance 201; and the cathode active material 203 located inside or outside the skeleton of the hollow nanofibrous carbon 202, wherein the cathode active material 203 is an olivine-type lithium iron phosphate represented by the following Chemical Formula 2.

[Chemical Formula 2] Li_{d}MPO₄

Where M represents one or more metal elements selected from the group consisting of Mn, Cr, Fe, Co, Ni, Cu, V, Mo, Ti, Zn, Al, Ga, Mg, B and Nb, and d represents a number of 0.5 to 1.5.

The cathode active material located inside or outside the carbon skeleton means a cathode active material precipitated and joined inside and outside a carbon substance such as carbon fibers.

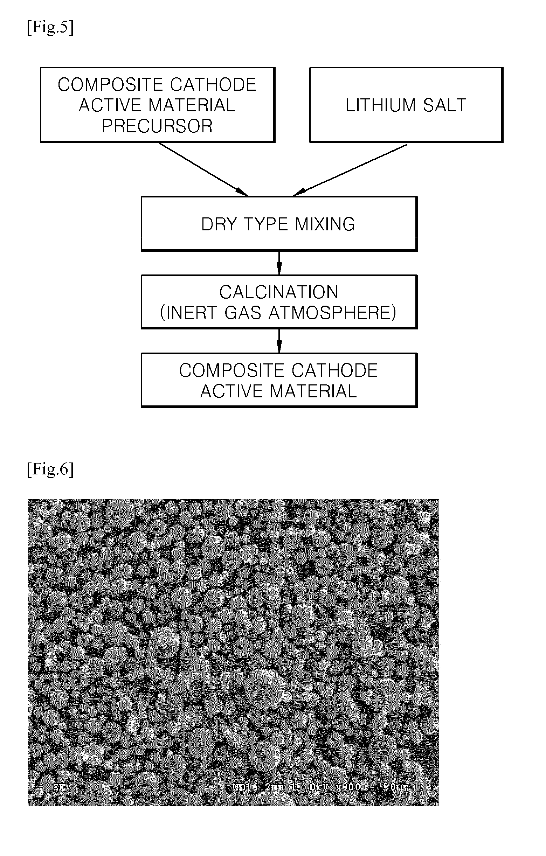

Fig. 5 is a flow chart for explaining the step of producing the composite cathode active material through the dry mixing process using the composite cathode active material precursor in a production method of a composite cathode active material for a rechargeable lithium battery according to other aspect of the present invention.

First, the cathode active material precursor and lithium salt are mixed and milled to dry the mixture. Subsequently, a composite cathode active material according to one aspect of the present invention having a structure illustrated in Fig. 1 is obtained by calcining the dried mixture in an inert gas atmosphere. Calcination for obtaining an olivine-type lithium iron phosphate suitable for a cathode active material for a high-capacity rechargeable lithium battery may be performed in a temperature range of 400 to 800 °C, preferably 500 to 700 °C, under an inert gas atmosphere since the composite cathode active material can be structured in a preferable structure while suppressing growth of the particle diameter of the composite cathode active material. The inert gas atmosphere inside a calcinations furnace may be formed by blowing gas selected from the group consisting of nitrogen gas, argon gas, and a combination thereof into the calcinations furnace.

The production method of a composite cathode active material for a rechargeable lithium battery of the present invention is capable of producing a composite cathode active material having the above-mentioned properties at superior reproducibility and productivity.

A rechargeable lithium battery of the present invention is a rechargeable lithium battery in which the cathode comprises the composite cathode active material according to the present invention in a lithium battery including an anode and a cathode enabling absorption and release of lithium ions, a separator interposed between the anode and cathode, and an electrolyte.

Hereinafter, the present invention will be described in more detail with reference to the following examples and comparative examples. However, the following examples and comparative examples are provided for illustrative purposes only, and the scope of the present invention should not be limited thereto in any manner.

Example 1

2 weight% of hollow nanofibrous carbon was uniformly dispersed into an aqueous solution of 0.3 M MnSO₄H₂O to prepare a dispersion. Dispersion of the hollow nanofibrous carbon performed using an ultrasonic dispersion method and a high-pressure dispersion method. Subsequently, the dispersion was continuously flown and 0.15 M Na₃PO₄12H₂O was sprayed into a flow of the dispersion to form Mn₃(PO₄)₂ and remove Na from the salt using a centrifuge. The reaction system was sufficiently stirred to a low speed within the reactor or ultrasonic waves were vibrated in the reaction system using Sonochemistry for 1 hour after adding 0.1M LiOH, 0.05M LiH₂PO₄, sucrose and an aqueous citric acid solution comprising LiMnPO₄, citric acid and sucrose at a ratio of 1:0.3:0.05 in an aqueous Mn₃(PO₄)₂ solution that is the Na-removed salt and stirring the mixture. A circulation type constant temperature oven was used to maintain temperature inside the reactor to 30 °C, control the operation frequency and intensity to 200 kHz and 300 W respectively, and constantly pressurize pressure inside the reactor to 3 atm. Argon gas was used inside the reactor. The reactant was dried at 150 °C in the spray dryer after the reaction. After drying the reactant, the resulting material was calcined at 700 °C for 24 hours in a nitrogen atmosphere.

Example 2

2 weight% of hollow nanofibrous carbon was uniformly dispersed into an aqueous solution of 0.15 M MnSO₄H₂O to prepare a dispersion. Dispersion of the hollow nanofibrous carbon performed using an ultrasonic dispersion method and a high-pressure dispersion method. Subsequently, the dispersion was continuously flown and 0.3 M NaOH was sprayed into a flow of the dispersion to form Mn(OH)₂ and remove Na from the salt using a centrifuge. The reaction system was sufficiently stirred to a low speed within the reactor or ultrasonic waves were vibrated in the reaction system using Sonochemistry for 1 hour after adding 0.1M LiOH, 0.05M LiH2PO4, sucrose and an aqueous citric acid solution comprising LiMnPO4, citric acid and sucrose at a ratio of 1:0.3:0.05 in an aqueous Mn(OH)₂ solution that is the Na-removed salt and stirring the mixture. The subsequent process is performed in the same manner as in the example 1.

Example 3

The cathode active material precursor produced in the example 1 was used, and lithium salt and carbon black were mixed and ball-milled. The mixed composite cathode active material was calcined at 750 °C for 24 hours in a nitrogen atmosphere.

Comparative Example 1

The cathode active material precursor was produced in the same method as in the example 1 except that sucrose and citric acid were not included in the example 1.

Comparative Example 2

The cathode active material precursor was produced in the same method as in the example 1 except that sucrose, citric acid and CNT were not included in the example 1.

Test Example 1

**FE-SEM**

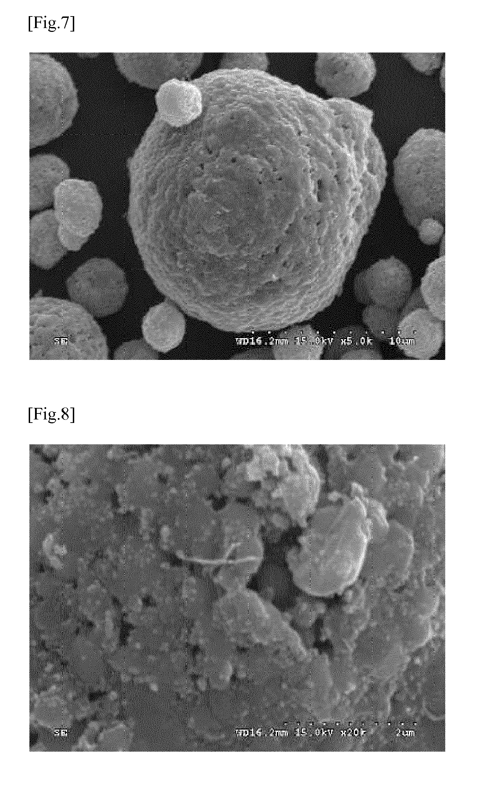

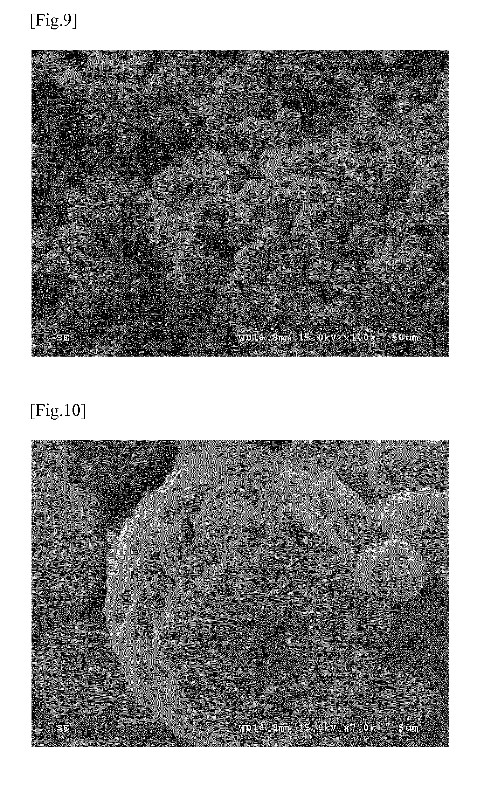

A process of observing the shape of particles of the composite cathode active material produced in the examples was performed by FE-SEM (Field Emission-Scanning Electron Microscope), and the observation resulting images were shown in Fig. 6 to Fig. 11.

Referring to Fig. 6 to Fig. 11, it can be seen that the foregoing composite cathode active material is effectively precipitated and bonded to the skeleton of the hollow nanofibrous carbon. That is, it can be seen that CNT is well dispersed into particles of the composite cathode active material, and the particles have an average particle size of about 10 microns as shown in the images.

Test Example 2

Particle Size Analysis

Particle size analysis of materials was conducted using a laser diffraction particle size analyzer. The samples of the corresponding particle sizes were designated as d10, d50, and d90 respectively after particle sizes of samples were confirmed at points at which cumulative volumes reached 10%, 50% and 90% respectively from the results of cumulative particle size distributions. The results of the particle size analysis were shown in the following Table 1.

**Table 1**

| Sample | | Particle Size | Tap density (g/cc) |
|---|---|---|---|
| Example 1 | d10 | 5.0 | 1.5 |
| | d50 | 9.4 | |
| | d90 | 13.3 | |
| Example 2 | d10 | 4.9 | 1.6 |
| | d50 | 9.4 | |
| | d90 | 13.3 | |
| Comparative Example 1 | d10 | 4.9 | 1.8 |
| | d50 | 12.0 | |
| | d90 | 19.5 | |
| Comparative Example 2 | d10 | 6.0 | 1.9 |
| | d50 | 11.6 | |
| | d90 | 21.1 | |

Test Example 3

Tap Density

Tap densities were calculated by injecting 50 g of materials into cylinders and measuring volumes of the cylinders after conducting 2,000 times of tapping, and the calculation results were shown in the table 1. It can be seen that the tap densities are decreased such that a carbon substance and CNT are included in the composite cathode active material. However, performances of the batteries were increased in the evaluation of batteries when the carbon substance and CNT are included in the composite cathode active material. Electrical conductivity, a problem of manganese, is thought to be improved to obtain good results in the battery evaluation.

Test Example 4

Battery Evaluation

Battery evaluation was conducted using a mixture obtained by weighing and mixing composite cathode active material, conductive material and binder to the weight ratio of 85:8:7. Electrode plate were manufactured by drying the coated slurry at 120 °C for 8 hours after preparing a slurry from the mixture and coating an aluminum thin film with the slurry. The manufactured electrode plates were pressed. Li metal was used as an anode, 2030-type coin cells were produced, and electrodes were used after producing it by dissolving IM-LiPF6 into EC-DEC to the volume ratio of 1:1. Charging and discharging were carried out at the charging condition of 4.4 V and discharging condition of 3.0 V. Charging and discharging were conducted at 0.1 C in order to confirm the initial capacity, and cycle characteristics were checked by 0.5 C charging and 1 C discharging.

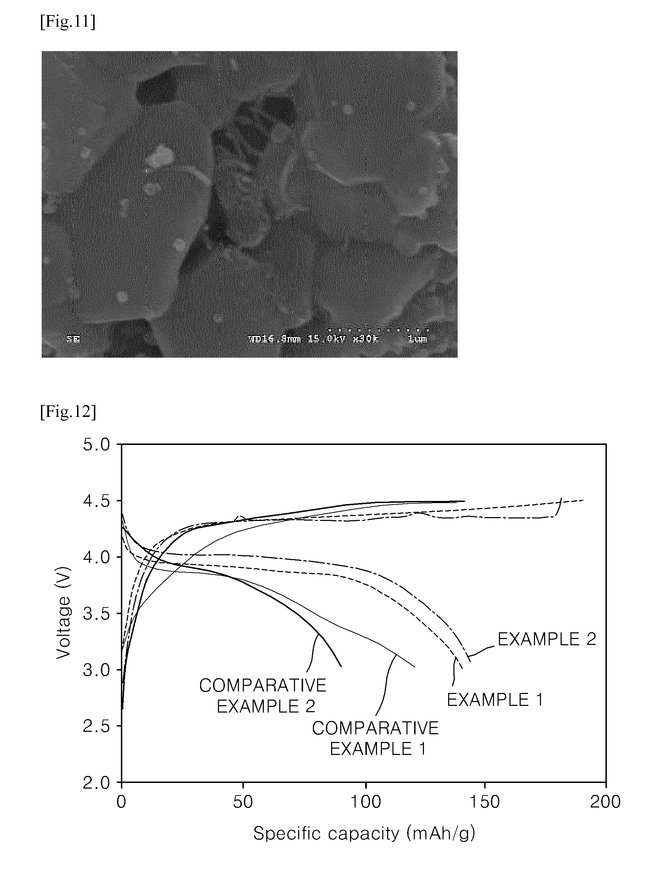

Fig. 12 is evaluation results of the present test.

Referring to Fig. 12, it can be seen that a cathode active material of the present invention in which an active material precursor is bonded to the skeleton of hollow nanofibrous carbon has higher capacity efficiency than those of comparative examples 1 and 2. That is, results of Fig. 12 show that cathode active materials in which a carbon substance and CNT are not included do not have good specific discharge capacities, and composite cathode active materials in which both the carbon substance and CNT are included have very good specific discharge capacities. Such results experimentally prove that the carbon substance and CNT improve electrical conductivity.

## Claims

1. A composite anode active material precursor for a rechargeable lithium battery comprising: hollow nanofibrous carbon; and an anode active material precursor joined to the skeleton of the hollow nanofibrous carbon, wherein the anode active material precursor comprising a metal composite represented by the following formula 1-1 or formula 1-2:
Mₐ(PO₄)_{b} · nH₂O (Formula 1-1)
M(OH)_{c} · nH₂O (Formula 1-2)
where M represents one or more metal elements selected from the group consisting of Mn, Cr, Fe, Co, Ni, Cu, V, Mo, Ti, Zn, Al, Ga, Mg, B and Nb, a represents a number of 1 to 3, b represents a number of 1 to 2, c represents a number of 2 to 6, and n represents a number of 0 to 10.

2. The composite anode active material precursor for a rechargeable lithium battery as claimed in claim 1, wherein the anode active material precursor is joined inside or outside the skeleton of the hollow nanofibrous carbon.

3. The composite anode active material precursor for a rechargeable lithium battery as claimed in claim 1, wherein the hollow nanofibrous carbon is single-walled carbon nanotubes or multi-walled carbon nanotubes.

4. The composite anode active material precursor for a rechargeable lithium battery as claimed in claim 1, wherein the hollow nanofibrous carbon has a diameter of 1 to 200 nm, and the metal composite is a crystal of which primary particles have an average particle diameter of 10 to 500 nm and of which secondary particles have an average particle diameter of 1 to 20 *µ*m.

5. A composite anode active material precursor comprising: hollow nanofibrous carbon; and an anode active material joined to the skeleton of the hollow nanofibrous carbon, wherein the anode active material is represented by the following formula 2, and the anode active material comprises a carbon substance:
Li_{d}MPO₄ (Formula 2)
where M represents one or more metal elements selected from the group consisting of Mn, Cr, Fe, Co, Ni, Cu, V, Mo, Ti, Zn, Al, Ga, Mg, B and Nb, and d represents a number of 0.5 to 1.5.

6. The composite anode active material precursor as claimed in claim 5, wherein the anode active material is an olivine type lithium phosphate surrounded by the carbon substance.

7. The composite anode active material precursor as claimed in claim 5 or 6, wherein the hollow nanofibrous carbon is single-walled carbon nanotubes or multi-walled carbon nanotubes

8. The composite anode active material precursor as claimed in claim 5 or 6, wherein the hollow nanofibrous carbon has a diameter of 1 to 200 nm.

9. The composite anode active material precursor as claimed in claim 5 or 6, wherein the carbon substance is one or more selected from the group consisting of sucrose, citric acid, starch, oligosaccharide, and pitch.

10. A production method of a composite anode active material precursor for a rechargeable lithium battery comprising the steps of: (a) uniformly dispersing hollow nanofibrous carbon into an aqueous solution of metal salt comprising metal M of a metal composite of the following Formula 1-1 or Formula 1-2 to prepare a dispersion; (b) continuously flowing the dispersion and spraying an aqueous phosphate solution into a flow of the dispersion to form a metal composite precipitate of the following Formula 1-1 or Formula 1-2 represented by the following Chemical Formula 1, and flowing a solution comprising the precipitate into a reactor; (c) stirring a reaction system in the reactor or vibrating ultrasonic waves in the reaction system using Sonochemistry, thereby allowing the metal composite to be precipitated inside and outside the skeleton of the hollow nanofibrous carbon to form an anode active material precursor; and (d) separating the anode active material precursor to recover, wash, and dry the anode active material precursor:
[Chemical Formula 1]
Mₐ(PO₄)_{b} · nH₂O (Formula 1-1)
M(OH)_{c} · nH₂O (Formula 1-2)
where M represents one or more metal elements selected from the group consisting of Mn, Cr, Fe, Co, Ni, Cu, V, Mo, Ti, Zn, Al, Ga, Mg, B and Nb, a represents a number of 1 to 3, b represents a number of 1 to 2, c represents a number of 2 to 6, and n represents a number of 0 to 10.

11. The production method of a composite anode active material precursor for a rechargeable lithium battery as claimed in claim 10, wherein the ultrasonic vibration is conducted at the multibubble sonoluminescence (MBSL) condition.

12. A production method of a composite anode active material comprising the steps of: (e) titrating a lithium salt and an aqueous carbon substance solution into an aqueous dispersion of the anode active material precursor produced according to claim 10 or 11 to stir and mix those raw materials; (f) drying the mixture; and (g) calcining the dried mixture in an inert gas atmosphere to obtain a composite anode active material, wherein the composite anode active material comprises hollow nanofibrous carbon, and an anode active material joined to the skeleton of the hollow nanofibrous carbon, and the anode active material is represented by the following formula 2:
Li_{d}MPO₄ (Formula 2)
where M represents one or more metal elements selected from the group consisting of Mn, Cr, Fe, Co, Ni, Cu, V, Mo, Ti, Zn, Al, Ga, Mg, B and Nb, and d represents a number of 0.5 to 1.5.

13. The production method of a composite anode active material as claimed in claim 12, wherein the anode active material is an olivine type lithium phosphate which comprises a carbon substance or which is surrounded by the carbon substance.

14. A production method of a composite anode active material further comprising the steps of: (e) milling a lithium salt and an anode active material precursor produced according to claim 10 or 11 to mix those raw materials; and (f) calcining the mixture in an inert gas atmosphere to obtain a composite anode active material, wherein the composite anode active material comprises hollow nanofibrous carbon, and an anode active material joined to the skeleton of the hollow nanofibrous carbon, and the anode active material is represented by the following Chemical Formula 2:
Li_{d}MPO₄ (Formula 2)
where M represents one or more metal elements selected from the group consisting of Mn, Cr, Fe, Co, Ni, Cu, V, Mo, Ti, Zn, Al, Ga, Mg, B and Nb, and d represents a number of 0.5 to 1.5.

15. The production method of a composite anode active material as claimed in claim 10, wherein the hollow nanofibrous carbon in the dispersion of the step (a) has a content of 0.1 to 10 weight% based on the total weight of the dispersion.

16. The production method of a composite anode active material as claimed in claim 10, wherein the hollow nanofibrous carbon is dispersed using an ultrasonic dispersion method or a high-pressure dispersion method in the step of preparing the dispersion of the step (a).

17. The production method of a composite anode active material as claimed in claim 10, wherein the step (b) is conducted in a method of spraying the aqueous phosphate solution into the dispersion using a spray nozzle while flowing the dispersion continuously and slowly using a metering pump.

18. The production method of a composite anode active material as claimed in claim 10, wherein the step (c) includes precipitation reaction of the crystal which is performed in a temperature range of 5 to 70 °C under an inert gas atmosphere.

19. The production method of a composite anode active material as claimed in claim 12 or 14, wherein the calcinations is performed in a temperature range of 400 to 800 °C under an inert gas atmosphere.
